# EUROPEAN PATENT APPLICATION

(11) **EP 3 769 850 A1**
(43) Date of publication of application: **27.01.2021**
(21) Application number: 19382619.5
(22) Date of filing: 22.07.2019
(51) Int. Cl.: B05B 11/00, H02N 2/18

(54) **PLUG FOR A LIQUID-PRODUCT DISPENSING CONTAINER**

(71) Applicant: Open Innovation 2 Go, SL, 28223 Pozuelo de Alarcón (Madrid) (ES)
(72) Inventor: Longarte Cifrián, Ignacio, 28223 Madrid (ES); De Pablos, David, 28223 Madrid (ES); Abad de Aranzábal, Guillermo, 28223 Madrid (ES); Baturone Moreno de Carlos, Pablo, 28223 Madrid (ES); Gómez Fuente, Oscar, 28223 Madrid (ES); Alcalá Galán, Francisco, 28223 Madrid (ES)
(74) Representative: Isern Patentes y Marcas S.L.

(57) **Abstract**

Plug (3) for a liquid-product dispensing container (1), and container (1) including said plug (3). The plug (3) includes a casing (5) to which the following is mounted: an actuator (7), to be pressed by a user for dispensing the liquid product; a dispensing head (8) comprising a valve (9) for releasing the liquid product; and an energy harvesting mechanism comprising a piezoelectric element (11) with a first end (12) which is movable when the actuator (7) is pressed by the user, for pressing against the valve (9) so as to release the liquid product and to be subjected to pressure for obtaining electricity therefrom. The electricity is used for powering detecting means which detect a number of services, wireless communication means for sending information on the number of uses and a controller (6) for controlling the detecting means and the communication means.

## Description

### Technical field of the invention

The present invention may be included within the technical field of dispensing liquid products, such as perfume, soap, oil, water, sun lotion, or sauce, among other, from a container, such as a bottle, by means of a dispenser comprising a typical pump-actuated dispenser. More particularly, the object of the invention relates to a plug for a liquid-product dispensing container and to a container comprising said plug.

### Background of the invention

A necessity has arisen of remotely gathering information, in an automatic way, on how many times a liquid product in a recipient, such as a bottle, is dispensed by a consumer (i.e. a number of services, also referred to as number of uses or number of actuations), so as to allow a producer of the liquid product to obtain consumption (and / or consumer) related data.

According to the Internet of things (loT), the bottle may include (for instance, in a plug thereof): a sensor for automatically detecting the number of services; wireless communication means for remotely sending the information on the number of services; a controller for controlling the sensor and the communication means; and a battery for powering the sensor, the communication means and the controller.

As a consequence, several aspects need to be dealt with, such as the need for allocating the battery, the weight of the battery, the space required by the battery, and the possibility that the battery gets emptied or damaged.

### Summarized description of the invention

The present invention overcomes the drawbacks mentioned above, by means of a plug for a liquid-product dispensing container according to the independent claims. Particular embodiments of the invention are described in the dependent claims.

In particular, by means of the present invention use of batteries is avoided, or dimensioning thereof is significatively reduced.

Furthermore, the invention relates to an energy-efficient, reliable pump-actuated container which also allows for liquid product remote monitoring of liquid product level / quantity / consumption through user hassle free technologies.

### Brief description of the figures

The advantages mentioned above, as well as other advantages and features of the present invention, shall be better understood with reference to the following detailed description of preferred embodiments with reference to the attached figures, which are to be construed as illustrative, non-limiting, and wherein
- Fig. 1 is a liquid-product dispensing container comprising a plug according to a first embodiment of the present invention.
- Fig 2 is a top exploded view of the plug comprised in the container of figure 1.
- Fig. 3 is a bottom exploded view of the plug comprised in the container of figure 1.
- Figs. 4A to 4C are cross-section views of the plug of figures 1-3 showing actioning of the actuator for dispensing liquid product and obtaining electricity.
- Fig. 5 is a liquid-product dispensing container comprising a plug according to a second embodiment of the present invention.
- Fig. 6 is a top exploded view of the plug comprised in the container of figure 5.
- Fig. 7 is bottom perspective view of the plug comprised in the container of figure 5.
- Figs. 8A and 8B are cross-section views of the plugs of figures 5-7 showing actioning of the actuator for dispensing liquid product and obtaining electricity.

### Detailed description of a preferred embodiment of the invention

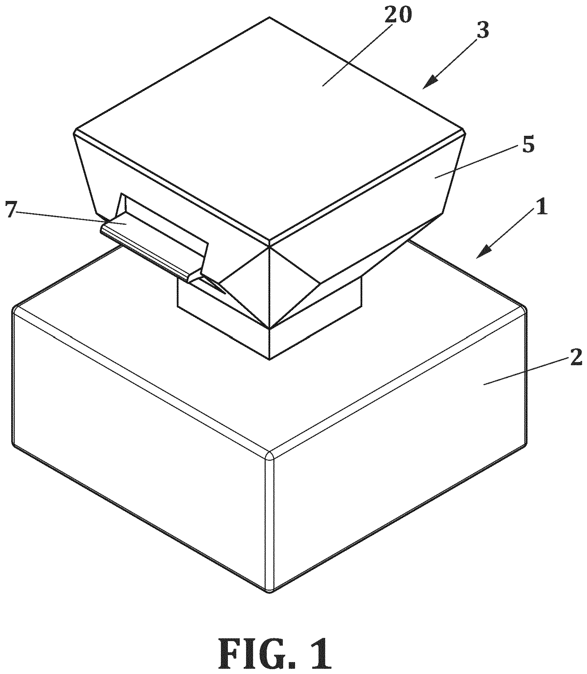

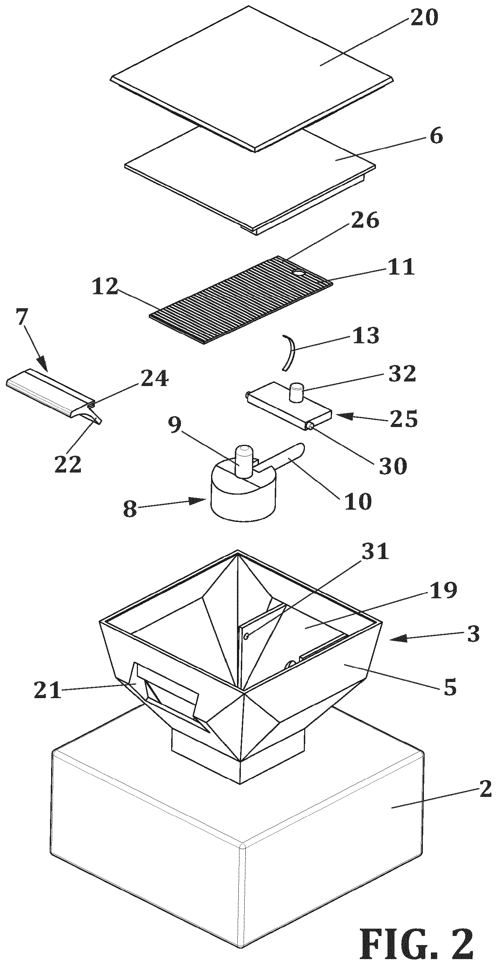

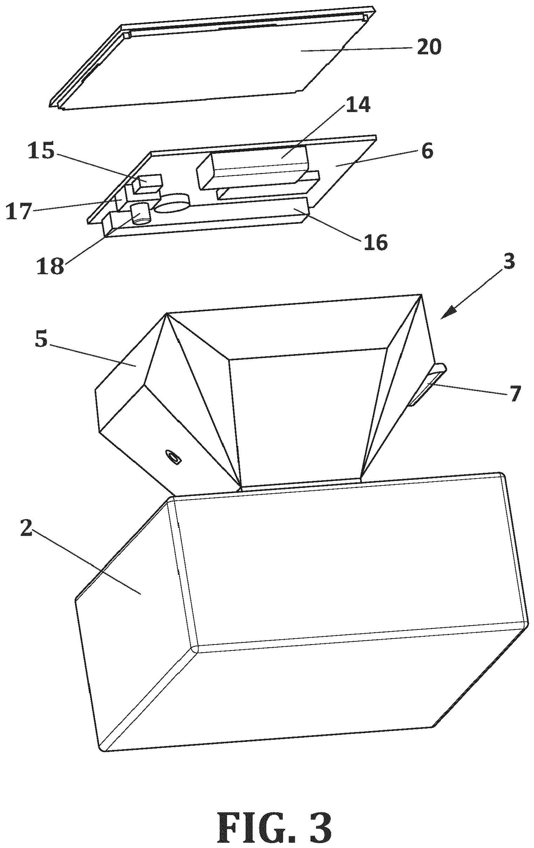

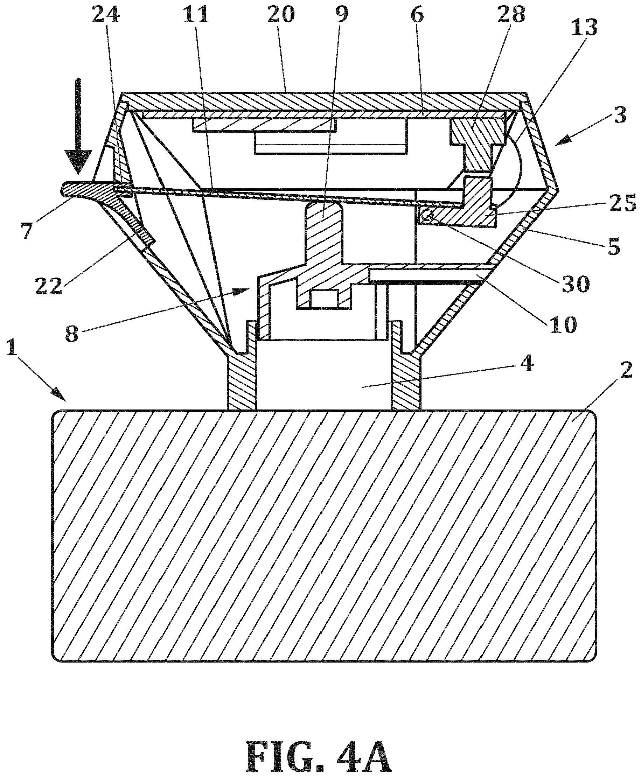

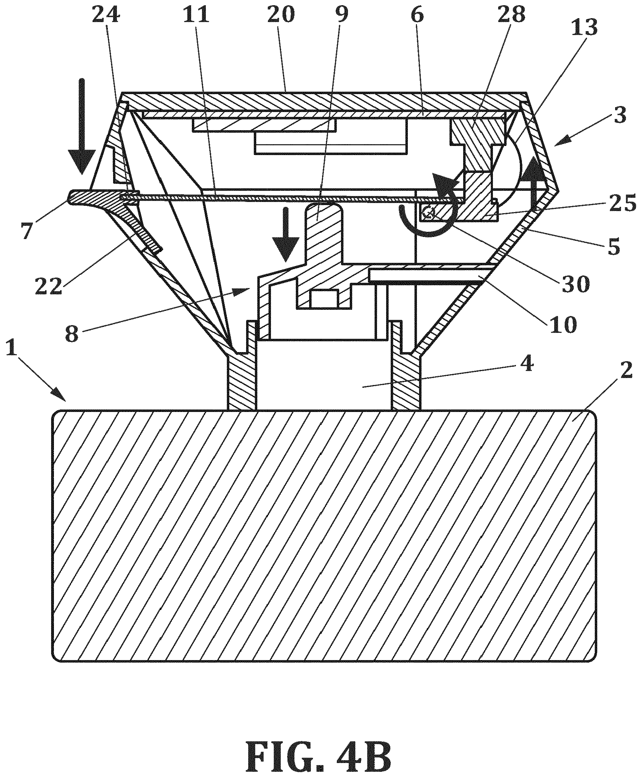

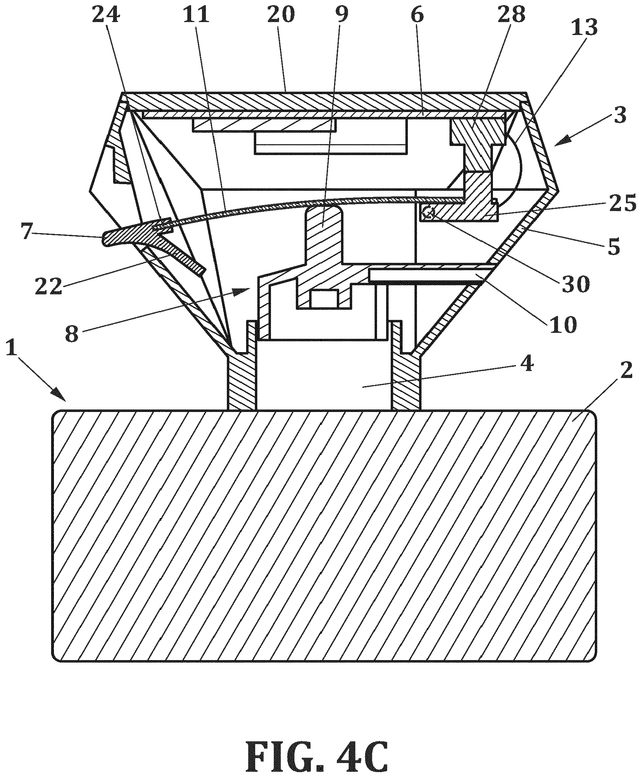

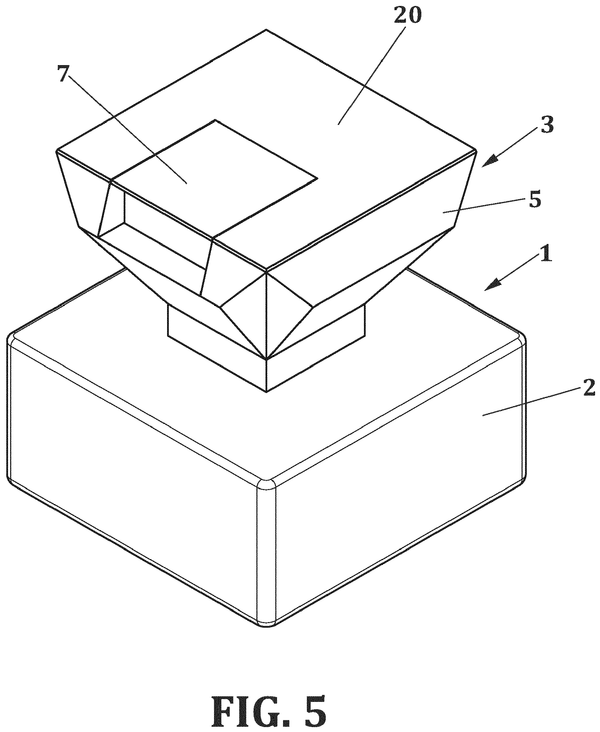

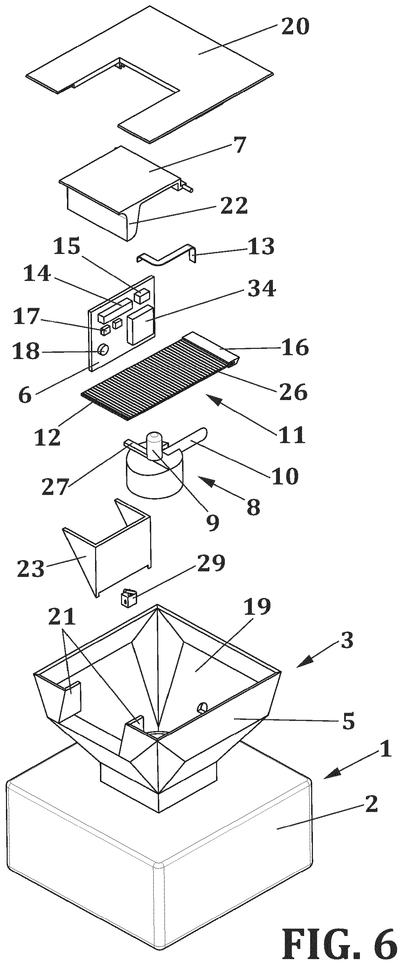

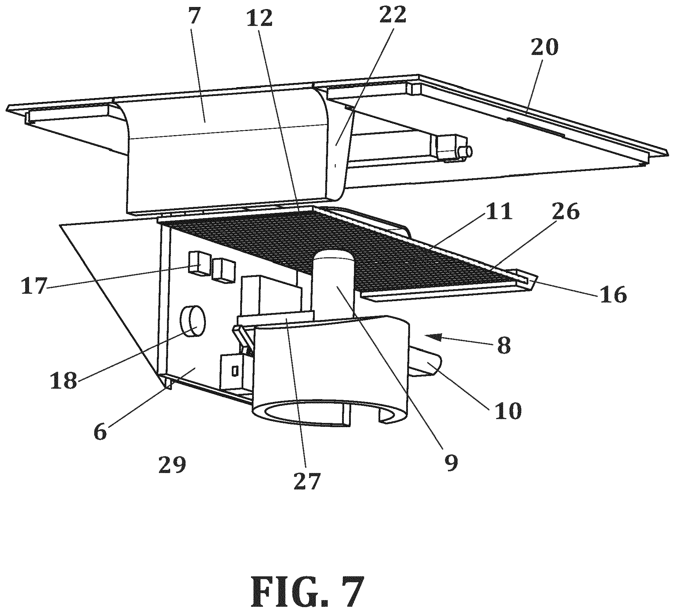

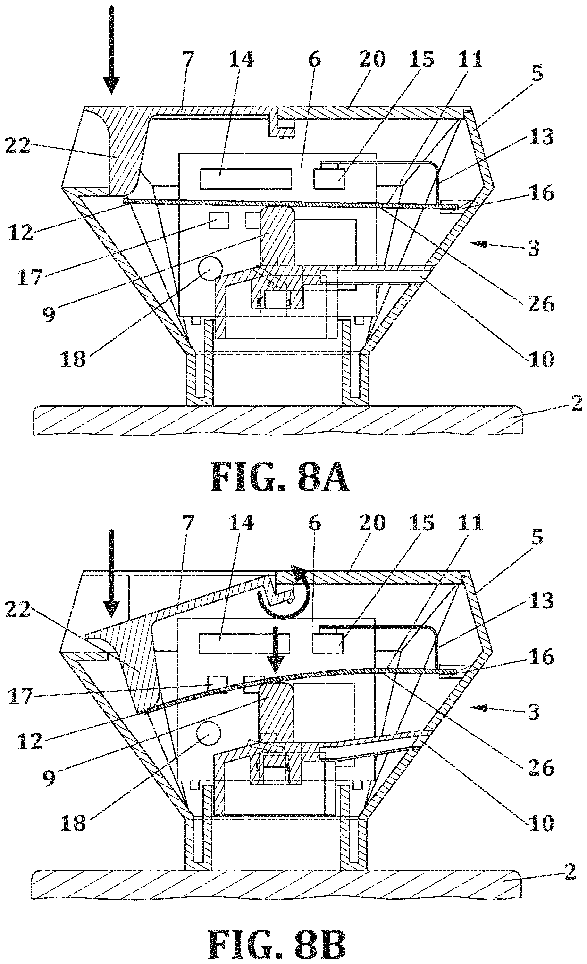

In the present section, a detailed description of preferred embodiments of the invention is provided, with reference to the above-mentioned figures 1-8.

A container (1), such as a bottle, for a liquid product, such as perfume, is represented in the figures 1-8B. The container (1) comprises an open container body (2) for containing the liquid product, and a plug (3), attached to the container body (2), for example, at a neck of the container body (2), for closing the container body (2). The plug (3) may, according to any particular design of the container body (2), be attached to the container body (2) at a top part of the container body (2) or at a side part of the container body (2), in both cases in correspondence with a container opening (4) of the container body (2). The embodiment represented in the figures shows the plug (3) being mounted at the top part of the container body (2).

As shown on figures 1-4C, the plug (3) comprises a casing (5), enclosing the following components, as will be explained below:
- a pressure-actuated dispensing mechanism, for dispensing the liquid content from the container (1);
- detecting means for automatically detecting a number of services, uses, actuations, etc.;
- wireless communication means for remotely sending information comprising the number of services;
- a controller (6), such as a PCB, for controlling the detecting means and the communication means; and
- an energy harvesting mechanism for powering the detecting means, the communication means and the controller.

The dispensing mechanism comprises:
- an actuator (7) for being pressed and released by the user, so as to be movable;
- a diptube (not shown), including a first end intended to be immersed in the liquid product, and a second end;
- a dispensing head (8), fluidly connected with the second end of the diptube, and comprising:
   - a valve (9), to be pressed and released as a consequence of the actuator (7) being respectively pressed and released by the user; and
   - a outlet duct (10), fluidly connected with the valve (9), and through which outlet duct (10) the liquid product is to be dispensed; and
- pumping means (not shown), for coordinating, through pressure-difference effects, the actions of pressing and releasing the valve (9), with access of the liquid product from the container body (2) to the diptube, from the diptube to the dispensing head (8) and from the dispensing head (8) to the outside through the outlet duct (10).

The dispensing mechanism as described above may preferably be a well-known dispensing mechanism already used for dispensing perfumes, shampoo, sun lotion, cosmetic treatments etc.

The energy harvesting mechanism performs a function of obtaining electricity from the movement of the actuator (7), based on the piezoelectric effect. In particular, the energy harvesting mechanism comprises an elongated piezoelectric element (11) having a first end (12) which is movable when the actuator (7) is pressed by the user.

The piezoelectric element (11) is located within the casing (5) so that when the piezoelectric element (11) is moved by pressing of the actuator (7), the piezoelectric element presses against the valve for releasing the liquid product. The contact of the piezoelectric element (11) against the valve (9) produces a pressure on the piezoelectric element (11) which is transformed into electricity. As shown in the figures, the valve (9) comprises an upper part, which is configured so as to provide a bending zone to be contacted by the piezoelectric element (11), allowing that a pressure field be generated within the piezoelectric element (11). A flexible cable (13) electrically connects the piezoelectric element (11) to the controller (6), preferably to a power management unit, PMU (14), which is attached, or connected, to the controller (6), such as the PCB. The PMU (14) is in charge of managing use of the electricity, which may be achieved as explained below.

The PMU (14) may store the electricity in an electricity storing means (15), such as a (micro) battery or a (super) condenser wherefrom the electricity is used for, among other, as explained above, remotely sending data regarding the number of services. The electricity may be treated, for example, rectified and / or stabilized, before being stored. By way of example, the electricity storing means (15) may be full of charge when initially mounted, wherein the energy harvesting mechanism cooperates to recharge the electricity storing means (15), which allow for mounting much smaller electricity storing means (15).

The valve (9) is located so as to be pressed by contact with the piezoelectric element (11) as the piezoelectric element (11) is moved by the actuator (7), whereas the outlet duct (10), which may be a sprayer, a diffuser, etc., is configured, located, and connected to the valve (9), so as to release the liquid product when the actuator (7) is pressed.

The detecting means comprises:
- a counter, located at the controller (6), such as the PCB, for storing the number of services; and
- increasing means, for increasing by one the number of services stored in the counter, as a response to the movement of the actuator (7).

The communication means serves for remotely sending information containing the number of services. The container (1) may be assigned a container ID code, which individually identifies the container (1). The container ID code is stored in an ID storing means (17) within the casing (5), preferably comprised in the controller (6). The information sent by the communication means preferably further includes the container ID code.

A processing unit (not shown) is used for externally and remotely processing the information of the container (1), preferably the information of a plurality of individual containers (1), for monitoring consumer and / or consumption data and control quantity level.

The communication means may comprise an antenna (18), such as, for instance, a chip antenna, preferably mounted on the controller (6), such as the PCB.

The plug (3) is open, by means of a plug opening (19), at a distal part of the casing, for allowing to mount all components within the casing (5). Therefore, the plug (3) further comprises a cover (20), mounted on said distal part of the casing (5), for covering the plug opening (19), thereby preventing access inside the casing (5) after all components are mounted.

Guides (21) may be provided within the casing (5) for guiding the movement of the actuator (7). The actuator (7) may include a projecting skirt (22) for hiding the inside of the casing (5), i.e., for preventing the user to access and, optionally, see inside the casing (5).

The controller (6) may be arranged horizontally, for example on a distal part of the casing (5), or vertically, for instance, within a housing (23) making part of the casing (5).

The piezoelectric element (11) is arranged according to the movement of the actuator (7). For instance, if the actuator (7) is vertically movable, the piezoelectric element (11) preferably features a substantially horizontal arrangement.

The actuator (7) may comprise a first connecting portion (24) for connecting to, and remaining in contact with, the first end (12) of the piezoelectric element (11).

The increasing means, as explained above, increases by one the number of services stored in the counter, as a response to the movement of the actuator (7). Various operation modes may be envisaged for the increasing means.

According to a first preferred operation mode, the increasing means is movable as a response to the movement of the actuator (7), i.e. the increasing means move to provoke the counter to increase. According to a first example, the increasing means is mounted on the piezoelectric element (11), wherein for instance, a hinge element (25) pivotally connected to the casing (5) is mounted on a second end (26) of the piezoelectric element (11). According to a second example, the increasing means are mounted on the valve (9), wherein the valve (9), by contacting the piezoelectric element (11), serves to maximize energy production, wherein for instance the increasing means comprises a protuberance (27), protruding from the valve (9), and movable along with the valve (9). Also preferably, the counter is arranged on the controller (6) so as to be activated by contact with the increasing means. More preferably, the counter comprises a switch (28, 29), such as push-button switch (28), like a KBS button, for instance, or a bi-stable switch (29), to be contacted by the increasing means.

According to a second operation mode, the increasing means, instead of being movable, is electrically connected to the piezoelectric element (11), preferably in parallel to the PMU (14), so that a (small) amount of the electricity provided by the piezoelectric element (11) is received as a counter-increasing signal by the increasing means, and wherein, by action of a control unit, the counter is increased by one every time that the increasing means receive the counter-increasing signal.

To obtain better efficiency through the piezoelectric effect, the piezoelectric element (11) is preferably as long as possible, considering the lever effect; therefore, the piezoelectric element (11) may integrate several layers of piezoelectric material superimposed to each other for achieving higher resistance to bending. As a result thereof, the higher number of layers of piezoelectric material involves greater capability for obtaining electricity

Preferably, the piezoelectric element (11) is fixed with respect to the casing (5) and / or with respect to the actuator (7) at least at a fixing portion of the piezoelectric element (11), so as to more efficiently be subjected to a pressure field allowing electricity to be obtained from the pressure field. For instance, the piezoelectric element (11) may be fixed at the first end (12), such as grasped by the first connecting portion (24) of the actuator (7), or may be fixed at the second end (26), such as by a second connecting portion (16) making part of the casing (5), as will be explained below.

For the sake of better explaining the invention, in the following paragraphs, two exemplary embodiments are disclosed in greater detail.

### FIRST EMBODIMENT:

According to the first embodiment, the PCB controller (6) is arranged horizontally on a distal part of the casing (5), which in the figures corresponds to an upper part of the casing (5). The piezoelectric element (11) is also arranged horizontally. In the first embodiment, the first end (12) of the piezoelectric element (11) is grasped by the first connecting portion (24) of the actuator, whereas at the second end (26) of the piezoelectric element (11) the hinge element (25) is mounted, for instance by means of a hinge rod (30) housed in two opposite holes (31) made in the casing (5).

According to the first embodiment, the piezoelectric element (11) rests on the valve (9) at an initial position, before the actuator (7) is pressed, so that, as soon that the user presses the actuator (7), the liquid product - such a fragrance - is dispensed. In the initial position, the piezoelectric element (11) is inclined to a purposely predesigned angle to gain bending and produce the most efficient energy generation capacity considering the available space.

When the actuator (7) is pressed, the piezoelectric element (11) rotates in relation with the hinge element (25) around the hinge rod (30), wherein the hinge element (25) includes a protrusion (32) for contacting with the counter, which may be a push-button switch (28), such as a KSB button, thereby counting a service of liquid product. At the same time, the piezoelectric element (11) pushes the valve (9) for spraying the liquid product.

The contact of the piezoelectric element (11) with the valve (9), as well as the contact of the protrusion (32) with the counter, generate a field of pressure within the piezoelectric element (11), which provides electricity with each actuation. The electricity is conducted by the flexible cable (13). Once the actuator (7) is released by the user, the piezoelectric element (11) returns to the initial position.

### SECOND EMBODIMENT:

According to the second embodiment, the PCB controller (6) is arranged vertically, on a side part of the casing (5), for instance, within the housing (23) making part of the casing (5). The piezoelectric element (11) is also arranged horizontally in the second embodiment.

According to the first embodiment, there is no first connecting portion (24) on the actuator (7) for grasping the first end (12) of the piezoelectric element (11); however, there is a second connecting portion (16) provided in the casing (5) for grasping the second end (26) of the piezoelectric element (11).

According to the second embodiment, the piezoelectric element (11) rests on the valve (9) at an initial position, before the actuator (7) is pressed, so that, as soon that the user presses the actuator (7), the liquid product - such a fragrance - is dispensed. In the initial position, the piezoelectric element (11) is inclined to a purposely predesigned angle to gain bending and maximize energy generation capacity.

When the actuator (7) is pressed, it contacts the piezoelectric element (11) and makes the piezoelectric element (11) push the valve (9), thereby dispensing the liquid product. At the same time, the protuberance (27) of the valve (9) contacts the counter, such as a switch (28, 29), for instance the bi-stable switch (29) for counting the action.

As in the first embodiment, the contact of the piezoelectric element (11) with the valve (9), as well as the bending of the piezoelectric element (11), generate a field of pressure within the piezoelectric element (11), which provides electricity. The electricity is conducted by the flexible cable (13). Once the actuator (7) is released by the user, the piezoelectric element (11) returns to the initial position.

According to both embodiments, each time that the user presses the actuator (7) for consuming the liquid product, one service of the liquid product is dispensed, as well as the counter is increased by one, and electricity is obtained via the piezoelectric element (11).

## Claims

1. Plug (3) for a liquid-product dispensing container (1), the plug (3) comprising a casing (5) and, mounted on the casing (5):
- an actuator (7), to be pressed by a user for dispensing the liquid product from the container (1);
- a dispensing head (8) of a pressure-actuated dispensing mechanism, for dispensing the liquid content from the container (1), and comprising:
- a valve (9), to be pressed and released as a consequence of the actuator (7) being respectively pressed and released by the user; and
- a outlet duct (10), fluidly connected with the valve (9), and through which outlet duct (10) the liquid product is to be dispensed;
- detecting means for automatically detecting a number of services;
- wireless communication means for remotely sending the information on the number of services; and
- a controller (6), for controlling the detecting means and the communication means;
the plug (3) being **characterized by** further comprising an energy harvesting mechanism enclosed in the casing (5), for powering the detecting means, the communication means and the controller (6), and comprising:
- an elongated piezoelectric element (11), having a first end (12) which is movable when the actuator (7) is pressed by a user, for pressing against the valve (9) so as to release the liquid product and to be subjected to pressure therefrom electricity is obtainable; and
- a flexible cable (13) electrically connecting the piezoelectric element (11) to a power management unit PMU (14), attached or communicated, to the controller (6), for managing use of the electricity.

2. Plug (3) for a liquid-product dispensing container (1) according to claim 1, wherein the piezoelectric element (11) is fixed with respect to the casing (5) and / or with respect to the actuator (7) at least at a fixing portion of the piezoelectric element (11).

3. Plug (3) for a liquid-product dispensing container (1), according to claim 2, wherein the actuator (7) comprises a first connecting portion (24) for connecting to, and remaining in contact with the first end (12) of the piezoelectric element (11).

4. Plug (3) for a liquid-product dispensing container (1), according to anyone of claims 1-3, wherein the detecting means comprises:
- a counter, located at the controller (6), for storing the number of services; and
- increasing means, for increasing by one the number of services stored in the counter, as a response of the movement of the actuator (6).

5. Plug (3) for a liquid-product dispensing container (1), according to claim 4, wherein the increasing means are movable as a response to the movement of the actuator (7).

6. Plug (3) for a liquid-product dispensing container (1), according to claim 5, wherein the increasing means are mounted on the piezoelectric element (11) or on the valve (9).

7. Plug (3) for a liquid-product dispensing container (1), according to claim 6, wherein the increasing means are mounted on the piezoelectric element (11), the plug (3) further comprising a hinge element (25) mounted on a second end (26) of the piezoelectric element (11), pivotally with respect to the casing (5), and wherein the increasing means comprises a protrusion (32) protruding from the hinge element (25) for contacting the counter so as to increase the number of services.

8. Plug (3) for a liquid-product dispensing container (1), according to claim 4, wherein the increasing means is electrically connected to the piezoelectric element (11), so that an amount of the electricity provided by the piezoelectric element (11) is received as a counter-increasing signal by the increasing means, so as to increase by one the number of services stored in the counter by action of a control unit, every time that the increasing means receive the counter-increasing signal.

9. Plug (3) for a liquid-product dispensing container (1), according claim 6, wherein the increasing means are mounted on the valve (9) and comprise a protuberance (27) protruding from the valve (9) for contacting the counter so as to increase the number services.

10. Plug (3) for a liquid-product dispensing container (1), according claim 9, further comprising a second connecting portion (16) provided on the casing (5) for grasping the second end (26) of the piezoelectric element (11).

11. Plug (3) for a liquid-product dispensing container (1), according to anyone of claims 5-10, wherein the counter comprises a switch (28, 29) to be contacted by the increasing means.

12. Plug (3) for a liquid-product dispensing container (1), according to anyone of claims 1-11, wherein the piezoelectric element (11) rests on the valve (9) at an initial position, in which the actuator (7) is not pressed, and wherein in the initial position, the piezoelectric element (11) is inclined to a purposely predesigned angle.

13. Plug (3) for a liquid-product dispensing container (1), according to anyone of claims 1-12, wherein the controller (6) is arranged vertically, within a housing (23) making part of the casing (5).

14. Plug (3) for a liquid-product dispensing container (1), according to anyone of claims 1-13, wherein the valve (9) comprises an upper part, which is configured so as to provide a bending zone to be contacted by the piezoelectric element (11), allowing that a pressure field be generated within the piezoelectric element (11).

15. A liquid-product dispensing container (1), **characterized by** comprising:
- a container body (2) for housing the liquid product, and comprising a container opening (4); and
- the plug (3) described in anyone of claims 1-14, attached to the container body (2), for closing the container opening (4).
